# EUROPEAN PATENT SPECIFICATION

(11) **EP 2 798 986 B1**
(45) Date of publication and mention of the grant of the patent: **21.10.2015**
(21) Application number: 14163986.4
(22) Date of filing: 09.04.2014
(51) Int. Cl.: A47J 31/44

(54) **Collector of spent coffee grounds for a coffee machine and coffee machine incorporating such a collector**
Sammler von Kaffeesatz für eine Kaffeemaschine sowie Kaffeemaschine mit einem solchen Sammler
Collecteur de marc de café usagé pour machine à café et machine à café incorporant un tel collecteur

(30) Priority: 03.05.2013 IT MI20130724
(43) Date of publication of application: 05.11.2014
(73) Proprietor: De'Longhi Appliances S.r.l., 31100 Treviso (IT)
(72) Inventor: De' Longhi, Giuseppe, 31100 TREVISO (IT); Altoe', Edy, 31025 S. LUCIA DI PIAVE (TREVISO) (IT); Sartor, Alessandro, 31030 VACIL DI BREDA DI PIAVE (TREVISO) (IT)
(74) Representative: Rapisardi, Mariacristina

(56) References cited:
- US-A1- 2010 251 900
- US-A1- 2012 182 825
- US-A1- 2013 081 739

## Description

The present invention relates to a collector for spent coffee grounds for a coffee machine and a coffee machine incorporating such a collector.

It is known that automatic or semi-automatic coffee machines have a loose or encapsulated spent coffee collector, extractable from the front side of the machine body for emptying.

This collector may be made of opaque or transparent material in order to allow its contents to be inspected without having to extract it from the machine.

If the collector is transparent, in some cases the machine body may be equipped with a light source provided to selectively illuminate an area of it. A coffee machine according to said state of the art is disclosed in US-A- 2012/0182825.

The illumination may have exclusively aesthetic value or also functional value, in the event that the light represents an alarm signal, for example to indicate lack of water or coffee.

One of the main drawbacks of the types of coffee machines having a transparent collector that can be illuminated consists of the fact that the transparent walls of the collector are inevitably dirtied with coffee residue, water containing coffee residue or condensation of steam.

The dirt that accumulates on the internal side of the transparent collector causes an unpleasant aesthetic effect given that it is visible and inevitably reduces the degree of transparency therefore increasingly the dispersion of light and finally the lighting performance.

The technical task of the present invention is, therefore, to realise a collector for spent coffee grounds for a coffee machine and a coffee machine incorporating such a collector, which obviates the above-described technical drawbacks of the prior art.

In the scope of this technical task, an aim of the invention is to realise a collector for spent coffee grounds that can be illuminated for a coffee machine, able to combine high lighting performance with an improved aesthetic effect.

Another aim of the invention is to realise a coffee machine with a collector for spent coffee grounds that can be illuminated having higher functionality.

The technical task, as well as these and other aims, according to the present invention, are reached by realising a coffee machine comprising at least one light source and a collector for spent coffee grounds that is built into the machine body in an extractable manner, characterised in that at least one wall of the collector is made of opaque material and has a transparent covering panel on the outer side that can be illuminated by said light source.

The present invention further discloses a collector for spent coffee grounds that can be built into the body of a coffee machine characterised in that it comprises at least one opaque wall having at least one transparent covering panel on the outer side, being provided with an air gap between said opaque wall and said transparent panel, and a tray for resting at least one cup on, supported on the outer side of said transparent covering panel.

Other characteristics of the present invention are also defined in the claims which follow.

Further characteristics and advantages of the invention will more fully emerge from the description of a preferred but not exclusive embodiment of the collector for spent coffee grounds and the machine incorporating such a collector according to the invention, illustrated by way of non-limiting example in the accompanying drawings, in which:

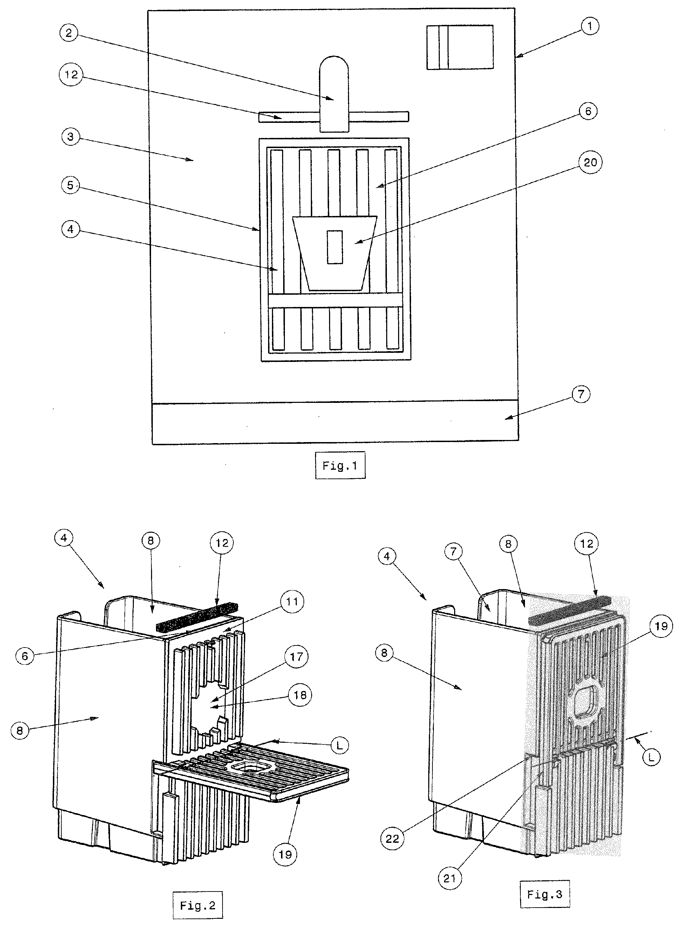

Figure 1 schematically shows a front view of the coffee machine incorporating the collector for spent coffee grounds;
Figure 2 shows a perspective view of the collector with the support tray for an open cup and with the indication of the position of the light source;
Figure 3 shows a perspective view of the collector with the support tray for a closed cup and with the indication of the position of the light source;

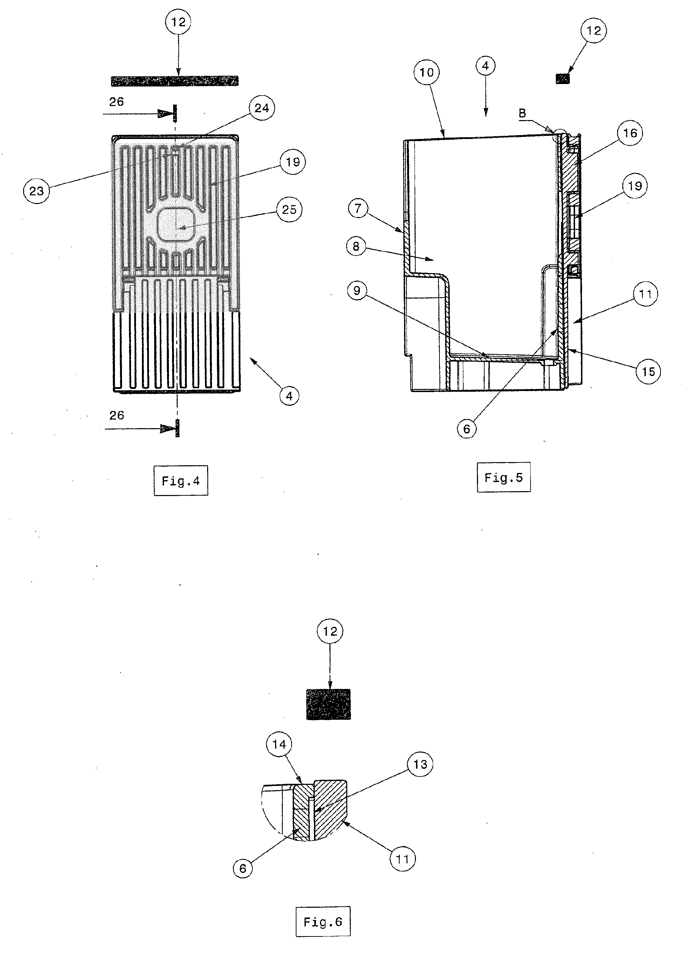

Figure 4 shows a front view of the collector with the support tray for a closed cup and with the indication of the position of the light source;
Figure 5 shows the collector sectioned along the line 26-26 of Figure 4, with an indication of the position of the light source;
Figure 6 shows an enlargement of the detail of figure 5 contained in a circle, with an indication of the position of the light source.

With reference to the figures mentioned, a coffee machine is shown indicated overall with the reference number 1.

The coffee machine 1 comprises a hydraulic circuit of the prior art having a feed pump, a boiler and an infusion unit (not shown) adapted to supply an external dispenser 2 projecting from the front wall 3 of the machine body.

The infusion unit is mobile between an opening configuration of an infusion chamber for unloading a fresh dose of loose or encapsulated coffee and unloading the dose of spent coffee grounds into a collector 4, and a closed portion of the infusion chamber for the realisation of the coffee infusion with pressurised water which the feed pump preliminarily caused to transit through the boiler.

At the front the machine has a control panel (not shown) and a drip collector tray 7 positioned below the external dispenser 2.

The body of the machine has a compartment 5 that opens at the front wall 3, into which the collector 4 is built in an extractable manner like a drawer.

The compartment 5 may also be located on different walls from the front one as indicated above.

The collector 4 has a front wall 6, a rear wall 7, side walls 8 and a bottom wall 9, while it is open at the top 10.

When the collector 4 is built into the compartment 5, its open top 10 is positioned along the drop path of the spent coffee grounds due to gravity when expelled from the infusion chamber, while its front wall 6 is in a directly accessible position to the operator, for example, flush with the front wall 3 of the machine body.

In the case in question the collector 4 has flat delimiting walls 6, 7 and 8, which give it a substantially parallelepiped configuration conjugated to that of the compartment 5 whose side walls therefore act as an extraction guide.

At least the front wall 6 of the collector 4 can however have a different configuration, for example convex.

Advantageously at least the front wall 6 of the collector 4 is made of opaque material and has a transparent covering panel 11 on its outer side that can be illuminated by a light source 12 present on the front wall 3 of the machine body above the front wall 6 of the collector 4.

The light source 12 may alternatively be positioned on one or more different sides from the top one indicated above.

The covering panel 11 and the front wall 6 of the collector 4 are coupled along their perimeter and delimit an air gap 13.

In particular the front wall 6 of the collector 4 has a perimeter projection 14 circumscribing the air gap 13.

The front wall 6 of the collector 4 and the covering panel 11 are coupled perimetrally in a continuous manner along the perimeter projection 14, for example by means of laser sealing, so as to create a hermetic seal for the air gap 13.

The air gap 13 does not necessarily have to be circumscribed by a hermetic coupling.

The coupling could take place for example using screws or mechanical connection means even on different areas from the perimeter, but still in order to guarantee the presence of the air gap 13.

Naturally the perimeter projection could alternatively be provided on the covering panel 11 or on either the front panel 6 of the collector 4 or on the covering panel 11.

The covering panel 11 preferably has a main flat wall 15 covering the front wall 6 of the container 4, and a plurality of longitudinal projections 16 on the outer side of the main covering wall 15.

The front wall 6 of the collector 4 has a through hole 17 and the transparent covering panel 11 has a lowered area 18 of the longitudinal projections 16 in order to allow the visual inspection of the contents of the collector 4.

The light source comprises at least one light emitting diode (LED) positioned in the machine body and a light guide 12 that extends longitudinally in the direction of the width of the machine body for a length substantially equal to the width of the covering panel 11 and is positioned on the upper extension of the covering panel 11 so that the covering panel 11 can be hit all over by the light radiation. The collector 4 preferably supports on the outer side of the covering panel 11 a rest tray 19 for at least one cup 20.

The tray 19 has an axis of oscillation L oriented in the direction of the width of the collector 4.

The tray 19 has rear lateral wings 21 engageable against abutments 22 provided on the lateral walls 8 of the collector 4 to be locked in the horizontal working position in which it defines a rest surface for the cup 20.

The tray 19 also has a front central opening 23 engageable by a tooth 24 provided on the covering panel 11 to be locked in a vertical position wherein it is folded up against the covering panel 11 when it is not used in order to reduce the dimensions of the collector 4.

Preferably the tray 19 also has a hole 25 superposable with the hole 17 and the lowered area 18 to allow, also when it is in the vertical position, the inspection of the contents of the collector 4.

The construction of the collector 4 has the unmistakable advantage of optimising the light performance since the light emitted by the light guide 12 fully hits the covering panel 11 from above, is transmitted to the inside of the main covering wall 15 and diffused towards the outside through the projections 16.

If the covering panel 11 is free from the projections 16, the diffusion of the light towards the outside is ensured by the same main flat covering wall 15. Furthermore, the provision of the hermetically sealed air gap 13 reduces the areas in contact between the transparent covering panel 11 and the opaque front wall 6 of the collector 4 and allows uniform distribution of the light onto the whole transparent covering panel 11 preventing the dispersion of light since the covering panel 11, from the side adjacent to the front wall 6 of the collector 4, is protected from contamination due to coffee residue, condensation of steam and the like. Some areas of the covering panel 11 may have different surface finishes in order to locally differentiate the light effect according to the desired result.

The light emitted by the light source may be of different colours and/or gradations and may be aesthetic and/or functional in order to signal alarms of the coffee machine, for example, in the event of lack of water and/or coffee.

The collector 4 is therefore split into two areas, the first of which, at the rear, intended to recover the spent coffee grounds, can be dirtied, while the second, at the front, is protected from dirt so as to keep its functionality constant over time. The collector as conceived herein is susceptible to many modifications and variations, all falling within the scope of the invented concept; furthermore, all the details are replaceable by technically equivalent elements.

The materials used, as well as the dimensions, may in practice be of any type according to requirements and the state of the art.

## Claims

1. A coffee machine (1) comprising at least one light source and one collector (4) for the spent coffee grounds that is built into the machine body in an extractable manner, **characterized in that** at least one wall (6) of the collector (4) is made of opaque material and has a transparent covering panel (11) on the outer side that can be illuminated by said light source.

2. The coffee machine (1) according to claim 1, **characterized in that** said light source comprises a light guide (12) positioned on the machine body.

3. The coffee machine (1) according to any one of the preceding claims, **characterized by** one or more light sources (12) positioned on one or more sides of the collector (4).

4. The coffee machine (1) according to any one of the preceding claims, **characterized in that** an air gap (13) is provided between said wall (6) of the collector (4) and said covering panel (11).

5. The coffee machine (1) according to the preceding claim, **characterized in that** said covering panel (11) and said wall (6) of the collector (4) are coupled along the perimeter thereof.

6. The coffee machine (1) according to the preceding claim, **characterized in that** said covering panel (11) and/or said wall (6) of the collector (4) have a perimeter projection (14) circumscribing said air gap (13), wherealong they are coupled.

7. The coffee machine (1) according to the preceding claim, **characterized in that** said air gap (13) has a hermetic seal defined by the coupling between said covering panel (11) and said front wall (6) of the collector (4) along said projection (14).

8. The coffee machine (1) according to any one of the preceding claims, **characterized in that** said light source (12) is positioned on the extension of the covering panel (11).

9. The coffee machine (1) according to any one of claims 2 to 8, **characterized in that** said light guide (12) extends longitudinally in the direction of the width of the machine body for a length substantially equal to the width of the covering panel (11) for complete illumination of the covering panel (11).

10. The coffee machine (1) according to any one of the preceding claims, **characterized in that** said covering panel (11) has a flat main covering wall (15) for covering said wall (6) of the collector (4).

11. The coffee machine (1) according to the preceding claim, **characterized in that** said wall (6) of the collector (4) is flat.

12. The coffee machine (1) according to claim 10 or 11, **characterized in that** said covering panel (11) has a plurality of longitudinal projections (16) on the outer side of said main wall (15).

13. The coffee machine (1) according to any one of the preceding claims, **characterized in that** said wall (6) of the collector (4) has at least one through hole (17) for visual inspection of the contents of the collector (4).

14. The coffee machine (1) according to any one of the preceding claims, **characterized in that** said collector (4) supports a rest tray (19) on the outer side of said covering panel (11), for resting at least one cup, said rest tray (19) being supported in a swingable manner between an operating position and a folded-up position against said covering panel (11).

15. A collector (4) for the spent coffee grounds that can be built into the body of a coffee machine (1), **characterized in that** it comprises at least one opaque wall (6) having a transparent covering panel (11) at least on the outer side, there being provided an air gap (13) between said opaque wall (6) and said transparent panel (11), and a tray (19) for resting at least one cup, supported on the outer side of said transparent covering panel (11).

## Patentansprüche

1. Kaffeemaschine (1), umfassend mindestens eine Lichtquelle und einen Sammler (4) für verbrauchten Kaffeesatz, der im Maschinenkörper auf ausziehbare Weise eingebaut ist, **dadurch gekennzeichnet, dass** mindestens eine Wand (6) des Sammlers (4) aus einem undurchsichtigen Material besteht und ein durchsichtiges Abdeckpaneel (11) an der Außenseite aufweist, das durch die Lichtquelle beleuchtet werden kann.

2. Kaffeemaschine (1) nach Anspruch 1, **dadurch gekennzeichnet, dass** die Lichtquelle eine Lichtführung (12) umfasst, die auf dem Maschinenkörper positioniert ist.

3. Kaffeemaschine (1) nach einem der vorhergehenden Ansprüche, **gekennzeichnet durch** eine oder mehrere Lichtquellen (12), die an einer oder mehreren Seiten des Sammlers (4) positioniert sind.

4. Kaffeemaschine (1) nach einem der vorhergehenden Ansprüche, **dadurch gekennzeichnet, dass** ein Luftspalt (13) zwischen der Wand (6) des Sammlers (4) und dem Abdeckpaneel (11) vorgesehen ist.

5. Kaffeemaschine (1) nach dem vorhergehenden Anspruch, **dadurch gekennzeichnet, dass** das Abdeckpaneel (11) und die Wand (6) des Sammlers (4) entlang dessen Umfang gekoppelt sind.

6. Kaffeemaschine (1) nach dem vorhergehenden Anspruch, **dadurch gekennzeichnet, dass** das Abdeckpaneel (11) und/oder die Wand (6) des Sammlers (4) einen Umfangsvorsprung (14) aufweisen, der den Luftspalt (13) umschreibt, an dem sie gekoppelt sind.

7. Kaffeemaschine (1) nach dem vorhergehenden Anspruch, **dadurch gekennzeichnet, dass** der Luftspalt (13) eine hermetische Abdichtung aufweist, definiert durch die Kupplung zwischen dem Abdeckpaneel (11) und der frontseitigen Wand (6) des Sammlers (4) entlang des Vorsprungs (14).

8. Kaffeemaschine (1) nach einem der vorhergehenden Ansprüche, **dadurch gekennzeichnet, dass** die Lichtquelle (12) an der Ausdehnung des Abdeckpaneels (11) positioniert ist.

9. Kaffeemaschine (1) nach einem der Ansprüche 2 bis 8, **dadurch gekennzeichnet, dass** sich die Lichtführung (12) längs in Richtung der Breite des Maschinenkörpers auf einer Länge erstreckt, die im Wesentlichen gleich der Breite des Abdeckpaneels (11) ist, um das Abdeckpaneel (11) vollständig zu beleuchten.

10. Kaffeemaschine (1) nach einem der vorhergehenden Ansprüche, **dadurch gekennzeichnet, dass** das Abdeckpaneel (11) eine flache Hauptabdeckwand (15) zum Abdecken der Wand (6) des Sammlers (4) aufweist.

11. Kaffeemaschine (1) nach dem vorhergehenden Anspruch, **dadurch gekennzeichnet, dass** die Wand (6) des Sammlers (4) flach ist.

12. Kaffeemaschine (1) nach Anspruch 10 oder 11, **dadurch gekennzeichnet, dass** das Abdeckpaneel (11) eine Vielzahl an Längsvorsprüngen (16) an der Außenseite der Hauptwand (15) aufweist.

13. Kaffeemaschine (1) nach einem der vorhergehenden Ansprüche, **dadurch gekennzeichnet, dass** die Wand (6) des Sammlers (4) mindestens ein Durchgangsloch (17) für die Sichtkontrolle des Inhalts des Sammlers (4) aufweist.

14. Kaffeemaschine (1) nach einem der vorhergehenden Ansprüche, **dadurch gekennzeichnet, dass** der Sammler (4) eine Abstellschale (19) an der Außenseite des Abdeckpaneels (11) trägt, um mindestens eine Tasse abzustellen, wobei die Abstellschale (19) auf schwenkbare Weise zwischen einer Betriebsposition und einer eingeklappten Position gegen das Abdeckpaneel (11) getragen wird.

15. Sammler (4) für verbrauchten Kaffeesatz, der in den Körper einer Kaffeemaschine (1) eingebaut werden kann, **dadurch gekennzeichnet, dass** er mindestens eine undurchsichtige Wand (6) umfasst, aufweisend ein durchsichtiges Abdeckpaneel (11) mindestens an der Außenseite, wobei ein Luftspalt (13) zwischen der undurchsichtigen Wand (6) und dem durchsichtigen Abdeckpaneel (11) vorgesehen ist, sowie eine Schale (19) zum Abstellen von mindestens einer Tasse, getragen an der Außenseite des durchsichtigen Abdeckpaneels (11).

## Revendications

1. Machine à café (1) comprenant au moins une source lumineuse et un collecteur (4) de marc de café usagé étant fabriqué dans le corps de la machine d'une manière extractible, **caractérisée en ce qu'**au moins une paroi (6) du collecteur (4) est constituée d'une matière opaque et possède un panneau de recouvrement transparent (11) sur le côté extérieur qui peut être éclairé par ladite source lumineuse.

2. Machine à café (1) selon la revendication 1, **caractérisée en ce que** ladite source lumineuse comprend un guide de lumière (12) positionné sur le corps de la machine.

3. Machine à café (1) selon l'une quelconque des revendications précédentes, **caractérisée par** une ou plusieurs sources lumineuses (12) positionnées sur un ou plusieurs côtés du collecteur (4).

4. Machine à café (1) selon l'une quelconque des revendications précédentes, **caractérisée en ce qu'**une distance libre (13) est prévue entre ladite paroi (6) du collecteur (4) et ledit panneau de recouvrement (11).

5. Machine à café (1) selon la revendication précédente, **caractérisée en ce que** ledit panneau de recouvrement (11) et ladite paroi (6) du collecteur (4) sont accouplés le long de son périmètre.

6. Machine à café (1) selon la revendication précédente, **caractérisée en ce que** ledit panneau de recouvrement (11) et/ou ladite paroi (6) du collecteur (4) possède une saillie périmétrale (14) circonscrivant ladite distance libre (13), à l'endroit où ils sont accouplés.

7. Machine à café (1) selon la revendication précédente, **caractérisée en ce que** ladite distance libre (13) possède un joint hermétique défini par l'accouplement entre ledit panneau de recouvrement (11) et ladite paroi antérieure (6) du collecteur (4) le long de ladite saillie (14).

8. Machine à café (1) selon l'une quelconque des revendications précédentes, **caractérisée en ce que** ladite source lumineuse (12) est positionnée sur le prolongement du panneau de recouvrement (11).

9. Machine à café (1) selon l'une quelconque des revendications de 2 à 8, **caractérisée en ce que** ledit conduit de lumière (12) se prolonge longitudinalement dans la direction de la largeur du corps de la machine sur une longueur substantiellement égale à la largeur du panneau de recouvrement (11) pour compléter l'éclairage du panneau de recouvrement (11).

10. Machine à café (1) selon l'une quelconque des revendications précédentes, **caractérisée en ce que** ledit panneau de recouvrement (11) possède une paroi de recouvrement principale plate (15) servant à recouvrir ladite paroi (6) du collecteur (4).

11. Machine à café (1) selon la revendication précédente, **caractérisée en ce que** ladite paroi (6) du collecteur (4) est plate.

12. Machine à café (1) selon les revendications 10 ou 11, **caractérisée en ce que** ledit panneau de recouvrement (11) possède une pluralité de saillies longitudinales (16) sur le côté extérieur de ladite paroi principale (15).

13. Machine à café (1) selon l'une quelconque des revendications précédentes, **caractérisée en ce que** ladite paroi (6) du collecteur (4) possède au moins un trou passant (17) destiné à l'inspection visuel du contenu du collecteur (4).

14. Machine à café (1) selon l'une quelconque des revendications précédentes, **caractérisée en ce que** ledit collecteur (4) supporte un plateau d'appui (19) sur le côté extérieur dudit panneau de recouvrement (11), servant à accueillir au moins une tasse, ledit plateau d'appui (19) étant supporté d'une manière telle qu'il puisse basculer entre une position de fonctionnement et une position repliée contre ledit panneau de recouvrement (11).

15. Collecteur (4) de marc de café usagé pouvant être fabriqué dans le corps d'une machine à café (1), **caractérisé en ce qu'**il comprend au moins une paroi opaque (6) ayant un panneau de recouvrement transparent (11) au moins sur le côté extérieur, une distance libre (13) étant prévue entre ladite paroi opaque (6) et ledit panneau transparent (11) ainsi qu'un plateau (19), destiné à accueillir au moins une tasse, supporté sur le côté extérieur dudit panneau de recouvrement transparent (11).
